# EUROPÄISCHE PATENTSCHRIFT

(11) **EP 3 077 863 B1**
(45) Veröffentlichungstag und Bekanntmachung des Hinweises auf die Patenterteilung: **09.10.2019**
(21) Anmeldenummer: 14808866.9
(22) Anmeldetag: 19.11.2014
(51) Int. Cl.: G02B 7/00, G02B 7/28, G03B 5/00, G03B 15/00, G06F 3/01, G02B 27/00, B60K 35/00, B60K 37/06, B60R 1/00, H04N 7/18

(54) **ANORDNUNG ZUM ERSTELLEN EINES BILDES EINER SZENE**
DEVICE FOR PROVIDING AT LEAST ONE IMAGE OF A SCENERY
DISPOSITIF POUR ÉLABORER AUX MOINS UN IMAGE D'UNE SCÈNE

(30) Priorität: 05.12.2013 DE 102013224962
(43) Veröffentlichungstag der Anmeldung: 12.10.2016
(73) Patentinhaber: Robert Bosch GmbH, 70442 Stuttgart (DE)
(72) Erfinder: SCHIEK, Ulrich, 30519 Hannover (DE); IBELE, Philipp, 31141 Hildesheim (DE)
(86) Internationale Anmeldenummer: PCT/EP2014/074980
(87) Internationale Veröffentlichungsnummer: WO 2015/082215

(56) Entgegenhaltungen:
- EP-A2- 2 112 547
- WO-A1-2014/198552
- DE-B4- 10 024 227
- KR-A- 20120 062 541
- KR-A- 20140 125 596
- US-A- 5 515 130
- US-A1- 2012 294 478

## Beschreibung

### Stand der Technik

Aus der Druckschrift DE 100 24 227 B4 sind ein Verfahren und eine Einrichtung zur elektronischen Überwachung des Aufmerksamkeitsgrades eines Kraftfahrzeugführers durch elektronische Überwachung der Augen und der Augenlidtätigkeit bekannt, wobei bei elektronischer Registrierung von Müdigkeit ein Alarmsignal generiert und die Geschwindigkeit automatisch reduziert wird. Die Blickrichtung des Fahrers wird erfasst und bewertet, wobei die Müdigkeit und die Blickrichtung nach einem Mustervergleichsverfahren bestimmt werden. Auch ist ein Verfahren zur Überwachung der Augen und der Augenlidtätigkeit bei Kraftfahrzeugführern beschrieben, bei dem eine ADR-geregelte automatisch gesteuerte Kolonnen- oder Staufahrt als zusätzliche Parameter die Aufmerksamkeit und die Blickrichtung des Kraftfahrzeugführers durch elektrooptische Augen- und Lidbeobachtung bewertet. Beim Folgefahren in Situationen, bei welchen der Vordermann die Fahrbahn in Unaufmerksamkeit oder aus technischen Mängeln oder situationswidrig verlässt, wird ein automatisches Nachfolgen dieses betreffenden Fahrzeuges dadurch unterdrückt, dass der geradeaus gerichtete Blick des Kraftfahrzeugführers korrigierend mitbewertet wird. Dabei erfolgt ein entsprechender Eingriff auf die elektronische Gaspedalbetätigung und/oder die elektronische oder elektrische Bremse und/oder eine elektronische oder elektrische Lenkbetätigung. Auf diese Weise soll ein Fahrzeugführer ggf. durch Korrektur oder entsprechende Blickrichtung und Blickrichtungsauswertung in der Lage sein, das Fahrzeug selbsttätig zu steuern. Insgesamt sollen durch Unaufmerksamkeit und nicht nur durch Schläfrigkeit entstehende Verkehrssituationen beherrschbar bleiben, insbesondere dann, wenn sich das Fahrzeug in einer mit kurzen Abständen zum vorausschauenden Fahrzeug bewegenden Kolonne mitbewegt.

Aus der Druckschrift EP 1 211 132 B1 ist eine Anordnung zum Überwachen des Umfelds eines Fahrzeugs mit einer im Weitwinkelbereich arbeitenden Kamera, einer Bildverarbeitungseinheit, welche Mittel zum Entzerren der von der Kamera aufgenommenen Bilder aufweist, und einer Bildanzeigeeinheit bekannt, wobei die Mittel zum Entzerren adaptiv auf der Grundlage eines ausgewählten Bildausschnittes arbeiten und die Mittel zum Entzerren adaptiv auf der Grundlage einer ausgewählten Blickrichtung arbeiten. Beschrieben wird ferner ein Verfahren zum Überwachen des Umfeldes eines Fahrzeugs mit den Schritten: Erfassen eines Weitwinkelbereiches mit einer Kamera, Entzerren der von der Kamera aufgenommenen Bilder in einer Bildverarbeitungseinheit und Anzeigen mindestens eines Bildes mit einer Bildanzeigeeinheit. Das Entzerren erfolgt auf der Grundlage eines Bildausschnitts und einer Blickrichtung, die automatisch, insbesondere bei Einlegen des Rückwärtsgangs oder gemäß dem Bildinhalt, dem Lenkwinkel, der Geschwindigkeit oder dem Nickwinkel der Kamera, oder quasi manuell durch eine Bedienperson, insbesondere einen Fahrer, anpassbar ausgewählt werden.

Ein Nutzer, der sich durch eine bzw. entlang einer Szene, z.B. entlang einer Strecke durch eine Landschaft oder Umgebung, bewegt und diese im Bild aufnehmen möchte, muss dazu eine Einrichtung zum Erfassen eines Bildes dieser Szene betätigen. Eine solche Betätigung bzw. Handhabung ist jedoch in manchen Situationen nicht möglich, wenn der Nutzer z.B. seine Bewegung nicht an beliebigem Ort bzw. für eine beliebige Zeitspanne unterbrechen kann, wie dies etwa bei einer Bewegung in einem Fahrzeug oder in einer Situation der Fall ist, in der dem Nutzer aus anderweitigen Gründen keine Zeit verbleibt, das betreffende Bild aufzunehmen.

### Offenbarung der Erfindung

Die Erfindung hat die Aufgabe, es einem Nutzer zu ermöglichen, auch ohne gesonderte Betätigungen bzw. Handhabungen der genannten Art für ihn interessante Bilder einer Szene gezielt zu erfassen bzw. festzuhalten.

Diese Aufgabe wird gelöst durch eine Anordnung zum Erstellen wenigstens eines Bildes einer Szene eines Umfeldes wenigstens eines Nutzers mit wenigstens einer Einrichtung zum Aufnehmen des wenigstens einen Bildes des Umfeldes, im folgenden kurz als Kamera bezeichnet, einer Einrichtung zum Erfassen eines Verhaltens des wenigstens einen Nutzers, im folgenden kurz als Erfassungseinrichtung bezeichnet, und einer Steuereinheit zum Auswerten des Verhaltens des wenigstens einen Nutzers und zum daraus Gewinnen wenigstens eines Steuersignals zu einem eine Auswahl einer Aufnahmerichtung sowie aufzunehmender Bildausschnitte bzw. Objekte des Umfeldes umfassenden Steuern der Einrichtung zum Aufnehmen des wenigstens einen Bildes des Umfeldes gemäß dem Verhalten des wenigstens einen Nutzers. Das Verhalten eines Nutzers oder mehrerer Nutzer ist wahl- oder wechselweise oder zugleich erfassbar. Der Kürze halber ist dafür im folgenden der gemeinsame Begriff des Nutzers verwendet. Eine Szene kann dabei eine beliebige Ansicht oder ein beliebiger Vorgang sein, die vom Nutzer wahrnehmbar sind bzw. wahrgenommen werden.

Dabei ist unter dem wenigstens einen Bild des Umfeldes, kurz: dem Bild, ein photographisch aufgenommenes Einzelbild, eine Bildfolge, eine Videosequenz oder dergleichen verstanden. Als Einrichtung zum Aufnehmen dieses Bildes, d.h. als Kamera in der vorbeschriebenen Bedeutung dieses Begriffs, dient wahlweise ebenso eine Mehrzahl von Kameras, z.B. Einzelbildkameras oder Videokameras, mit denen nach Wunsch wechselweise oder zugleich Bilder aufnehmbar sind. Mit dem Begriff des Verhaltens des Nutzers sind hier Aktionen und/oder Reaktionen des Nutzers in unterschiedlichen Situationen bzw. auf unterschiedliche Ereignisse bezeichnet, d.h. alle Handlungen und Bewegungen des Nutzers, insbesondere auch Blicke bzw. Blickrichtungen. Zum Verhalten des Nutzers werden dagegen in erster Linie nicht solche Handlungen und Bewegungen gezählt, die typische bzw. übliche Bedienungsbewegungen bzw. -gesten darstellen, wie z.B. Betätigen von Tasten, Drehknöpfen oder dergleichen. Erfindungsgemäß erfolgt das Steuern des Aufnehmens des Bildes vorrangig durch vom Nutzer unwillkürlich vorgenommene Handlungen, d.h. unwillkürliches Verhalten, und ein zentrales Merkmal der Erfindung fußt auf dem Erfassen und Auswerten dieses unwillkürlichen Verhaltens. In damit übereinstimmender Weise wird darüber hinaus ebenso gleichartiges, willkürliches Verhalten erfasst. Die Steuereinheit ist speziell angepasst ausgebildet zum Auswerten des vorstehend umrissenen Verhaltens des Nutzers. Die Steuereinheit ist also eingerichtet zum gezielten Auswerten eines derart als unwillkürlich zu bezeichnenden Verhaltens und zum daraus Gewinnen des wenigstens einen Steuersignals zum Steuern der Kamera. Dieses Steuern umfasst eine Auswahl einer Aufnahmerichtung, d.h. der Richtung, in der eine Mitte eines aufzunehmenden Bildausschnitts bzw. Objekts von der Kamera aus gesehen wird, sowie eine Auswahl der Größe der aufzunehmenden Bildausschnitte bzw. Objekte. Vorteilhaft umfasst die Steuereinheit ferner eine Einrichtung zum Bearbeiten, z.B. Entzerren, des Bildes oder auch eine Einrichtung zum Auswählen eines Bildes oder mehrerer Bilder aus einer Mehrzahl aufgenommener Bilder nach vorgebbaren Auswahlkriterien. Durch die erfindungsgemäße Anordnung erfolgt das Aufnehmen des Bildes somit selbsttätig durch laufende, selbsttätige Auswertung des Verhaltens des Nutzers.

Die Erfindung ermöglicht dem Nutzer, automatisch Bilder ihm wichtiger oder wichtig erscheinender Szenen, d.h. Ansichten oder Vorgänge, aufzunehmen. Ein umständliches oder zeitraubendes, insbesondere manuelles Bedienen einer Kamera ist nicht mehr erforderlich. Der Nutzer muss z.B. während einer Fahrt in einem Fahrzeug, in dem er die erfindungsgemäße Anordnung mitführt, nicht erst anhalten, um ein Bild aufzunehmen, was in bestimmten Verkehrssituationen nicht oder zu spät möglich ist oder wofür dem Nutzer ggf. die Zeit fehlt. Auch ist durch die erfindungsgemäße Anordnung ein Bild in Situationen aufnehmbar, in denen der Nutzer die Notwendigkeit dafür noch nicht erkannt hat; z.B. wird durch die erfindungsgemäße Anordnung eine bestimmte Reaktion des Nutzers auf ein Erscheinen einer Szene als Wunsch ausgewertet, davon ein Bild aufzunehmen, noch bevor der Nutzer eine endgültige Entscheidung darüber gefällt hat, und wird das betreffende Bild aufgenommen. Der Nutzer erhält durch die erfindungsgemäße Anordnung automatisch Bilder, d.h. z.B. Photos oder Videosequenzen, und damit Erinnerungen für ihn interessanter Szenen, d.h. Ansichten oder Vorgänge. Damit verringert sich z.B. während einer Fahrt in einem Fahrzeug das Unfallrisiko. Zum Aufnehmen eines Bildes genügt es dann z.B., dass der Nutzer seinen Blick für eine bestimmte Dauer aufmerksam auf die aufzunehmende Szene richtet. Von der Erfassungseinrichtung wird diese Handlung, d.h. Kopfhaltung und/oder Augenstellung sowie die genannte Dauer, erfasst. In der Steuereinheit wird dies als Wunsch, ein Bild aufzunehmen, ausgewertet und ein demgemäßes Steuersignal gewonnen. Mit diesem werden die Aufnahmerichtung sowie der aufzunehmende Bildausschnitt in der Kamera gemäß einer aus Kopfhaltung und/oder Augenstellung gewonnenen Blickrichtung des Nutzers eingestellt und das Bild mit diesen Einstellungen automatisch aufgenommen. In vergleichbarer Weise sind auch beliebige andere Handlungen des Nutzers einzeln oder in Kombination auswertbar, wobei eine Zuordnung der Handlungen zu daraus zu gewinnenden Steuersignalen beliebig festlegbar ist. Die erfindungsgemäße Anordnung ist damit sehr leistungsfähig und flexibel verwendbar.

Vorteilhafte Ausgestaltungen der erfindungsgemäßen Anordnung sind in den Unteransprüchen gekennzeichnet.

Gemäß einer bevorzugten Weiterbildung der erfindungsgemäßen Anordnung ist die Einrichtung zum Erfassen des Verhaltens des wenigstens eines Nutzers mit wenigstens einer optischen Erfassungseinrichtung und/oder wenigstens einer akustischen Erfassungseinrichtung und/oder wenigstens einer Positionserfassungseinrichtung ausgebildet. Als derartige optische Erfassungseinrichtung ist z.B. eine Beobachtungskamera vorgesehen, mit der der Nutzer wenigstens teilweise, bevorzugt Augen und Gesicht, aber auch z.B. Hände, und deren Bewegungen bzw. Gesten erfassbar sind. Die akustische Erfassungseinrichtung ist vorteilhaft mit wenigstens einem Mikrofon ausgestaltet zum Aufnehmen von Lauten, aber auch Sprachkommandos des Nutzers. Die Positionserfassungseinrichtung umfasst bevorzugt wenigstens einen Lagesensor und/oder Richtungssensor, insbesondere ausgebildet zum Ermitteln einer Kopfhaltung des Nutzers. Besonders bevorzugt sind die vorstehend aufgeführten Erfassungseinrichtungen in einer Datenbrille angeordnet, die Lage- und Richtungssensor bzw. -sensoren für die Kopfhaltung, Beobachtungskamera für z.B. die Augenstellung und Mikrofon umfasst. In einer Verwendung in einem Fahrzeug ist die optische Erfassungseinrichtung bevorzugt mit einer Innenraumkamera und die akustischen Erfassungseinrichtung mit einem Mikrofon im Armaturenbrett ausgestaltet. Auch ist eine Kombination der vorstehenden Ausgestaltungen möglich. In einer abgewandelten Verwendung für Einsatzkräfte, bevorzugt der Feuerwehr, sind die aufgelisteten Erfassungseinrichtungen in einem Helm integriert und ist so z.B. eine automatische Dokumentation eines Einsatzgeschehens vorteilhaft unmittelbar möglich, ohne dadurch die Einsatzkräfte mit zusätzlich durchzuführenden Aufgaben zu belasten bzw. in ihrer Einsatztätigkeit zu behindern.

Bei einer weiteren bevorzugten Ausführungsform der erfindungsgemäßen Anordnung ist die Steuereinheit ausgebildet zum Ermitteln und/oder Auswerten einer beliebigen Auswahl und/oder Kombination wenigstens folgender Merkmale des Verhaltens des wenigstens einen Nutzers, im folgenden abgekürzt als der Nutzer bezeichnet: einer Dauer und einer Richtung eines Blicks des Nutzers, einer Pupillengröße und/oder einer zeitlichen Änderung dieser Pupillengröße des Nutzers, eines Gesichtsausdrucks des Nutzers, einer Laut- und/oder Sprachäußerung des Nutzers, einer Geste des Nutzers. Beim Auswerten dieser Merkmale erfolgt vorteilhaft zugleich ein Gewichten. Ein bevorzugtes Kriterium ist z.B. die Blickrichtung des Nutzers. Insbesondere eine Abweichung der Blickrichtung von einer Bewegungsrichtung des Nutzers, zu deren Ermittlung nachfolgend Erläuterungen gegeben werden, ist ein wichtiges Kriterium, da eine solche Blickabwendung von einer Richtung einer durch den Nutzer verfolgten Strecke als sicheres Indiz dafür gewertet wird, dass sich dort eine Szene befindet, die vom Nutzer als ein Aufnehmen eines Bildes wert betrachtet wird. Dabei ist bevorzugt auch die Dauer einer solchen Blickabwendung auszuwerten. Für die Erkennung und Auswertung der Blickrichtung und der Pupillengröße stehen in der Steuereinheit bevorzugt Mittel zur Mustererkennung zur Verfügung. Ähnlich dazu sind auch Mittel für eine Gestenerkennung für z.B. Körper-, Arm- oder Handgesten vorgesehen sowie weiterhin Mittel für eine Laut- oder Spracherkennung. Die Mittel zur Mustererkennung dienen auch der Auswertung des Gesichtsausdrucks.

Mit einer derartigen Ausbildung der Steuereinheit wird z.B. erkannt, dass der Nutzer mehrfach für eine einen vorgebbaren Grenzwert überschreitende Dauer den Blick interessiert auf eine seitwärts seiner Bewegungsrichtung befindliche Szene, z.B. ein Gebäude, richtet. Aus der Erkennung der Dauer, der Häufigkeit, der Blickrichtung und -abwendung sowie des Interesses bzw. der Aufmerksamkeit über Zeitmessungen, Bewegungs- und Blickrichtungsbestimmungen sowie Musterkennung der Gestalt, d.h. des Ausdrucks des Gesichts und insbesondere der Augen und einer z.B. als Maß für die Aufmerksamkeit des Nutzers ausgewerteten Pupillengröße wird von der Steuereinheit eine Bewertung der Szene in Blickrichtung als aufnehmenswert vorgenommen und automatisch eine Aufnahme durch die Kamera ausgelöst.

In einer vorteilhaften Weiterbildung ist die erfindungsgemäße Anordnung gekennzeichnet durch eine Speichereinrichtung, im folgenden kurz als Speicher bezeichnet, zum Speichern wenigstens einer Auswahl der aufgenommenen Bilder des Umfeldes. Dieser Speicher ist vorteilhaft an die Steuereinheit angeschlossen und zum Speichern wahlweise sämtlicher von der Kamera aufgenommener Bilder des Umfeldes oder einer von der Steuereinheit bestimmten Auswahl dieser Bilder ausgebildet.

Eine weitere bevorzugte Ausführungsform der erfindungsgemäßen Anordnung ist gekennzeichnet durch eine Anzeigeeinheit zum Anzeigen wenigstens einer Auswahl der aufgenommenen Bilder des Umfeldes. Damit kann der Nutzer sofort nach Tätigen der Aufnahme oder bevorzugt zu einem späteren Zeitpunkt die zwischenzeitlich von der Anordnung erstellten Bilder des Umfeldes sichten und/oder sich zu einer Bearbeitung wie z.B. einem Entzerren usw. anzeigen lassen. Die Anzeigeeinheit ist vorteilhaft an die Steuereinheit angeschlossen.

Ferner ist die Anzeigeeinheit vorteilhaft nutzbar zum Anzeigen von Bedienvorgängen für die Steuereinheit, bevorzugt im Zusammenwirken mit einer bevorzugten Weiterbildung der erfindungsgemäßen Anordnung, gemäß der eine Bedieneinheit zum Bedienen der Anordnung durch Eingeben von Bedienbefehlen an die Steuereinheit vorgesehen und bevorzugt an die Steuereinheit angeschlossen ist. Die Bedieneinheit ist bevorzugt einsetzbar zum manuellen, individuellen, späteren Nachbearbeiten der aufgenommenen und gespeicherten Bilder sowie zum Bedienen der Steuereinheit für Einstell- und/oder Programmiervorgänge an der Anordnung.

Bei einer weiteren bevorzugten Ausführungsform der erfindungsgemäßen Anordnung ist eine Verbindung mit einer Navigationseinheit gebildet, die eingerichtet ist zum Ermitteln einer Position und/oder Bewegungsrichtung des wenigstens einen Nutzers, kurz: des Nutzers, und zum Übertragen der ermittelten Position und/oder Bewegungsrichtung an die Steuereinheit zum Auswählen eines aufzunehmenden Bildes des Umfeldes und/oder zum Verknüpfen mit wenigstens einer Auswahl der aufgenommenen Bilder des Umfeldes. Vorteilhaft ist dabei auch die Navigationseinheit an die Steuereinheit angeschlossen. Von der Navigationseinheit abgegebene, die Position bzw. die Bewegungsrichtung des Nutzers beschreibende Daten sind somit als gemeinsamer Datensatz mit den zugehörigen Bildern des Umfeldes zu deren Kennung und Identifizierung bei einem späteren Aufrufen dieser Bilder verknüpft, d.h. gemeinsam gespeichert. Bevorzugt können zu den Bildern des Umfeldes auch ein Aufnahmezeitpunkt oder Kameraeinstellungen oder dergleichen gespeichert sein. Die von der Navigationseinheit gelieferten Daten sind von der Steuereinheit zusätzlich zu den oben aufgelisteten Merkmalen des Verhaltens des Nutzers und/oder in Kombination mit diesen Merkmalen auswertbar, um ein Aufnehmen eines Bildes des Umfeldes auszuwählen. Wahlweise kann zum Bestimmen der Position und/oder Bewegungsrichtung des Nutzers anstelle oder in Kombination mit der Navigationseinheit auch wenigstens ein Bewegungssensor und/oder Richtungssensor eingesetzt sein, z.B. eine Kompassanordnung, eine Wegaufnehmeranordnung, oder dergleichen. Bevorzugt ergänzen sich dabei die von der Navigationseinheit und dem wenigstens einen Bewegungssensor und/oder Richtungssensor gelieferten, die Position bzw. die Bewegungsrichtung des Nutzers beschreibenden Daten.

Eine vorteilhafte Weiterbildung ist gekennzeichnet durch eine Verwendung und/oder eine Aufnahme der erfindungsgemäßen Anordnung in einem Fahrzeug, wobei Fahrer und/oder Mitfahrer des Fahrzeugs der wenigstes eine Nutzer, kurz: der Nutzer, sind. Bei dieser bevorzugten Einsatzform bzw. Ausgestaltung ist die erfindungsgemäße Anordnung vorteilhaft fest im Fahrzeug verbaut und in ein dort vorhandenes bzw. zu weiteren Steuerungszwecken für das Fahrzeug vorgesehenes Steuerungsnetzwerk integriert. Dies trifft insbesondere zu für die Steuereinheit, die Innenraumkamera, die Einrichtung zum Aufnehmen dieses Bildes, d.h. die Kamera, hier bevorzugt als Außenkamera am Fahrzeug ausgebildet, das Mikrofon und die Datenbrille, die außer von der erfindungsgemäßen Anordnung auch zu anderen Aufgaben im Fahrzeug nutzbar sind. Dadurch lässt sich der gesamte zusätzliche apparative Aufwand für die erfindungsgemäße Anordnung sehr gering halten.

Eine weitere bevorzugte Ausgestaltung der erfindungsgemäßen Anordnung ist gekennzeichnet durch eine Verbindung mit einer Übertragungseinheit zum Übertragen wenigstens einer Auswahl der erfassten Bilder des Umfeldes an und/oder über ein Kommunikationsnetzwerk. Durch diese Kombination mit der Übertragungseinheit sind die aufgenommenen Bilder des Umfeldes wahlweise oder zusätzlich zur Speicherung im vorbeschriebenen Speicher einem Kommunikationsnetzwerk, z.B. einem E-Mail-Anschluss, einem sozialen Netzwerk oder einer Zentralspeichereinrichtung außerhalb der erfindungsgemäßen Anordnung zuführbar und z.B. an weitere Kommunikationsteilnehmer versendbar oder außerhalb der erfindungsgemäßen Anordnung abspeicherbar, z.B. in einer sogenannten "Cloud", d.h. z.B. einem über ein Kommunikationsnetzwerk erreichbaren Zentralspeicher eines Dienstleistungsanbieters des Kommunikationsnetzwerks oder dergleichen.

Nach einer vorteilhaften Weiterbildung der erfindungsgemäßen Anordnung ist eine Verbindung mit einer Rechnereinheit zum Übertragen und wahlweisen Bearbeiten und/oder Speichern wenigstens einer Auswahl der aufgenommenen Bilder und/oder zum Steuern der Anordnung durch die Rechnereinheit vorgesehen. Über eine solche Rechnereinheit ist die erfindungsgemäße Anordnung zusätzlich zu oder anstelle der Bedieneinheit programmier-, steuer- bzw. einstellbar, z.B. zu Wartungszwecken, oder es lassen sich darauf die aufgenommenen Bilder zusätzlich zum oder anstelle des Speichers speichern bzw. auch außerhalb der erfindungsgemäßen Anordnung bearbeiten, z.B. Entzerren.

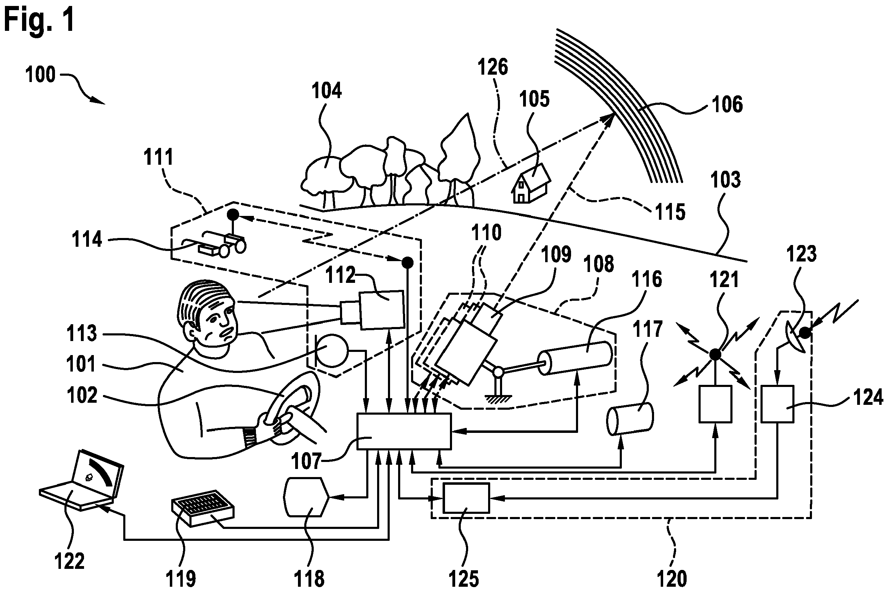

Ein in der Zeichnung dargestelltes Ausführungsbeispiel der Erfindung ist im nachfolgenden näher beschrieben. Figur 1 zeigt eine grob schematische Darstellung einer erfindungsgemäßen Anordnung 100 zum Gebrauch durch einen Nutzer 101 in einem durch ein Lenkrad 102 angedeuteten Fahrzeug, mit dem er sich als Fahrer oder Mit- bzw. Beifahrer entlang einer Strecke durch eine Landschaft 103 entlang unterschiedlicher Szenen bzw. Objekte bewegt, als die hier z.B. ein Wald 104, ein Haus 105 und ein Regenbogen 106 angedeutet sind. Die im Fahrzeug befindliche Anordnung 100 umfasst eine Steuereinheit 107, an die als Einrichtung 108 zum Aufnehmen von Bildern der Szenen bzw. Objekte 104, 105, 106 eine Außenkamera 109 angeschlossen ist, ferner als Erfassungseinrichtung 111 zum Erfassen eines Verhaltens des Nutzers 101 eine Innenraumkamera 112, ein Mikrofon 113 und eine Datenbrille 114. In einer Abwandlung kann die Erfassungseinrichtung 111 die Innenraumkamera 112, das Mikrofon 113 oder die Datenbrille 114 in unterschiedlichen Kombinationen umfassen. Wahlweise sind weitere Außenkameras 110 von der Einrichtung 108 zum Aufnehmen von Bildern der Szenen bzw. Objekte 104, 105, 106 umfasst. Mit den Außenkameras 109, 110 sind unterschiedliche Aufnahmerichtungen sowie aufzunehmende Bildausschnitte erfassbar. Eine Aufnahmerichtung 115 der Außenkamera 109 ist beispielhaft angedeutet. Wahlweise ist als Außenkamera 109 eine Rundumkamera mit einem Bildausschnitt von 360° vorgesehen. Eine Antriebseinheit 116 dient zum durch die Steuereinheit 107 gesteuerten Ausrichten der Außenkameras 109, 110 in die von der Steuereinheit 107 ermittelten Aufnahmerichtungen und ist demgemäß ebenfalls an die Steuereinheit 107 angeschlossen. Außerdem sind an die Steuereinheit 107 angeschlossen: ein Speicher 117 zum Speichern der von den Außenkameras 109, 110 aufgenommenen Bilder oder einer Auswahl davon, eine Anzeigeeinheit 118 zum Anzeigen aufgenommener Bilder oder von Bedienvorgängen für die Steuereinheit 107, eine z.B. als Tastatur ausgebildete Bedieneinheit 119 zum Bedienen der Anordnung 100, eine zum Ermitteln einer Position und/oder Bewegungsrichtung des Nutzers 101 eingerichtete Navigationseinheit 120, eine Übertragungseinheit 121 zum Übertragen der erfassten Bilder oder einer Auswahl davon an bzw. über ein Kommunikationsnetzwerk und eine Rechnereinheit 122 zum Übertragen und wahlweisen Bearbeiten bzw. Speichern der aufgenommenen Bilder bzw. zum Steuern der Anordnung 100 durch die Rechnereinheit 122. Dabei umfasst die Navigationseinheit 120 eine Antenne 123 zum Empfang von Navigationssignalen, einen Navigationsempfänger 124, z.B. einen GPS-Empfänger, und eine Stufe 125 zum Ermitteln der Position und Bewegungsrichtung des Nutzers 101 aus den empfangenen Navigationssignalen.

Der sich gemäß der Darstellung nach Figur 1 im Fahrzeug durch die Landschaft 103 bewegende Nutzer 101 beobachtet eine für ihn interessante Szene, z.B. den Regenbogen 106. Er wendet dazu seine Blickrichtung 126 von seiner Bewegungsrichtung entlang einer Strecke ab. Durch die Innenraumkamera 112 und/oder die Datenbrille 114, auch als digitale Brille bezeichnet, wird seine Blickrichtung 126 festgestellt. Bei mehreren Nutzern 101 werden auch deren Blickrichtungen ermittelt. Dazu erfasst die Innenraumkamera 112 wenigstens Gesicht und Augen und vorteilhaft auch Hände des Nutzers 101 bzw. erfasst die Datenbrille 114 durch darin angeordnete Lage- und/oder Richtungssensoren sowie Augenkameras die Stellung des Kopfes und der Augen. Auch wird der zeitliche Verlauf der Blickrichtung 126 ermittelt. Diese Daten werden in der Steuereinheit 107 ausgewertet, wozu außer der Dauer und Richtung der Blickzuwendung weiterhin bevorzugt eine Änderung der Pupillengröße als Maß für die Aufmerksamkeit, der Gesichtsausdruck, etwa für Überraschung, Ärger, Freude usw., durch das Mikrofon erfasste Sprachaussagen und unbewusste Ausrufe sowie ebenfalls durch die Innenraumkamera 112 erfasste Gesten wie etwa Zeigegesten einzeln oder in wahlweiser Kombination herangezogen werden. Diese Merkmale des Verhaltens des Nutzers 101 werden durch Mittel zur Erkennung der Mimik bzw. Gestenerkennung durch bevorzugt Mustererkennung sowie Spracherkennung ausgewertet und Annahmen bestimmter Willensregungen zugeordnet. So wird z.B. ein Verweilen der Blickrichtung 126 abgewandt von der Bewegungsrichtung über einen Zeitraum, der einen vorgegebenen Grenzwert überschreitet, der Annahme einer Willensregung zugeordnet, ein Bild einer in dieser Richtung befindlichen Szene, z.B. des Regenbogens 106, aufzunehmen. Auch ist z.B. eine Zeigegeste einer Hand des Nutzers 101 bevorzugt der Annahme dieser Willensregung zugeordnet. Dabei werden die einzelnen Merkmale des Verhaltens des Nutzers 101 zum Bilden einer aus allen Merkmalen resultierenden Annahme einer Willensregung unterschiedlich gewichtet. Ein besonders stark gewichtetes Kriterium ist dabei die Blickabwendung des Fahrers von der Bewegungsrichtung, d.h. von der Strecke.

Aus diesen Merkmalen und ihrer Gewichtung wird von der Steuereinheit ein Maß für die Relevanz der beobachteten Szene ermittelt. Bei einem ausreichenden Maß an Relevanz wird aus der bestimmten Blickrichtung auf das Vorhandensein einer außerhalb des Fahrzeugs befindlichen, zu fotografierenden Szene geschlossen. Über die Außenkameras 109, 110 werden dann ein oder mehrere Bilder aufgenommen, von der Steuereinheit ggf. bearbeitet, z.B. entzerrt und im Speicher 117 gespeichert. Die Bearbeitung durch die Steuereinheit 107 umfasst vorteilhaft auch eine Auswahl eines relevanten Bildausschnitts, insbesondere, wenn als Außenkamera 109 eine Rundumkamera mit einem Bildausschnitt von 360° vorgesehen ist. Vorteilhaft ist ferner ein Bild auch mit dem ermittelten Maß für die Relevanz der beobachteten Szene, dem Ort und der Zeit der Aufnahme und der Person, die die Aufnahme ausgelöst hat, verknüpft gespeichert. Die Speicherung der Bilder erfolgt weiter vorteilhaft wahlweise im Speicher 117 oder in einer über die Übertragungseinheit 121 verbundene Zentralspeichereinrichtung außerhalb der erfindungsgemäßen Anordnung 100, z.B. in einer sogenannten "Cloud".

Im dargestellten Beispiel fährt der Nutzer 101 auf einer Landstraße, beobachtet seitwärts einen Regenbogen und wendet wiederholt seinen Blick von der Straße der Szene zu. Von der erfindungsgemäßen Anordnung 100 wird anhand der wiederholten Blickabwendung über z.B. die Innenraumkamera 112 erkannt, dass der Nutzer dieser Szene Aufmerksamkeit widmet. Gegebenenfalls werden dazu weitere Merkmale wie etwa die Mimik des Nutzers 101 - z.B. ist der Nutzer 101 überrascht - mit in die Auswertung aufgenommen. An den erkannten Blickrichtungen der einzelnen Blicke über der Zeit und der währenddessen gefahrenen Strecke werden von der Steuereinheit 107 die aufzunehmenden Bildausschnitte bzw. Szenen oder Objekte geschätzt und im Bild festgehalten, d.h. ein Bild aufgenommen. Ergibt die Schätzung mehrere in Frage kommende Szenen bzw. Objekte, werden von der erfindungsgemäßen Anordnung 100 mehrere Bilder aufgenommen, d.h. Bilder aller in Frage kommenden Szenen bzw. Objekte. In einer weiteren Ausgestaltung ist die erfindungsgemäße Anordnung 100, insbesondere die Steuereinheit 107, dazu ausgebildet, anhand der zu jedem Bild erfassten Merkmale des Verhaltens des Nutzers 101 eine Bewertung der Relevanz der einzelnen Bilder für den Nutzer 101 vorzunehmen, d.h. aus einer Zusammenschau aller Merkmale des Verhaltens auf die Höhe des Interesses des Nutzers 101 an dem betreffenden Bild zu schließen, z.B. darüber, wie ausgeprägt der Nutzer 101 auf die Wahrnehmung der Szene bzw. des Objekts reagiert hat. Nach dem Ergebnis der Bewertung der Relevanz können von der Steuereinheit 107 vorzugsweise die wichtigsten Bilder ausgewählt, dem Nutzer auf der Anzeigeeinheit 118 angezeigt, im Speicher 117 oder der Rechnereinheit 122 gespeichert, über die Übertragungseinheit 121 an Zentralspeicher, als E-Mails oder an soziale Netzwerke versandt oder auch selbsttätig gelöscht werden.

In weiteren Ausgestaltungen der erfindungsgemäßen Anordnung 100 sind Bilder vom gesamten Umfeld aufzunehmen, wenn z.B. wegen mehrerer unregelmäßiger Wechsel der Blickrichtung des Nutzers 101 diese Blickrichtung nicht eindeutig erfasst werden kann. Bevorzugt ist dazu die Außenkamera 109 als Rundumkamera ausgestaltet, oder mit mehreren Außenkameras 109, 110 aufgenommene Bilder werden in der Steuereinheit 107 zu einer bevorzugt vollständigen Rundumansicht kombiniert und die Kombination gespeichert. Daraus kann später vom Nutzer 101 z.B. über die Anzeigeeinheit 118 oder die Rechnereinheit 122 der gewünschte Bildausschnitt gewählt werden. Bilder lassen sich in einem privaten Nutzerkonto speichern, das nur dem die Aufnahme der Bilder auslösenden Nutzer zugänglich ist. Bilder sind dem Nutzer auf der Anzeigeeinheit 118, der Datenbrille 114 oder einer Blickfeldanzeige - sogenanntes "Head-up Display" - darstellbar. Sie sind in eine durch die Navigationseinheit 120 z.B. auf der Anzeigeeinheit 118 angezeigte Darstellung einer Landkarte einblendbar. Bilder sind von der Steuereinheit 107 nach Inhalten durch Mustererkennung bewertbar, so dass z.B. Bilder von Straßenschildern, Passanten, anderen Fahrzeugen oder dergleichen bevorzugt nach Nutzerkonfiguration der Auswahlkriterien, d.h. der Vergleichsmuster, automatisch aussortierbar sind. Aus der Position und Blickrichtung des Nutzers und Kartendaten der Navigationseinheit 120 ist von der Steuereinheit 107 ermittelbar, ob die Szene in der Blickrichtung z.B. eine Sehenswürdigkeit und damit bevorzugt aufzunehmen ist, was in die obige Bewertung der Relevanz einbeziehbar ist. Damit ist die Außenkamera 109 gezielter ausrichtbar. Eine selbsttätige Aktivierung der Anordnung 100 ist dadurch möglich, dass von der Navigationseinheit 120 aus Kartendaten eine Bewegung des Nutzers 101 entlang landschaftlich sehenswerter Strecken bzw. Sehenswürdigkeiten erkannt wird.

## Patentansprüche

1. Anordnung (100) zum Erstellen wenigstens eines Bildes einer Szene (104, 105, 106) eines Umfeldes (103) wenigstens eines Nutzers (101) mit
• wenigstens einer Einrichtung (108) zum Aufnehmen des wenigstens einen Bildes des Umfeldes (103),
• einer Einrichtung (111) zum Erfassen eines Verhaltens des wenigstens einen Nutzers (101),
• einer Steuereinheit (107) zum Auswerten des Verhaltens des wenigstens einen Nutzers (101) und zum daraus Gewinnen wenigstens eines Steuersignals für ein eine Auswahl einer Aufnahmerichtung (115) sowie aufzunehmender Bildausschnitte bzw. Objekte (104, 105, 106) des Umfeldes (103) umfassendes Steuern der Einrichtung (108) zum Aufnehmen des wenigstens einen Bildes des Umfeldes (103) gemäß dem Verhalten des wenigstens einen Nutzers (101).

2. Anordnung (100) nach Anspruch 1, **dadurch gekennzeichnet, dass** die Einrichtung (111) zum Erfassen des Verhaltens des wenigstens eines Nutzers (101) mit wenigstens einer optischen Erfassungseinrichtung (112) und/oder wenigstens einer akustischen Erfassungseinrichtung (113) und/oder wenigstens einer Positionserfassungseinrichtung ausgebildet ist.

3. Anordnung (100) nach Anspruch 1 oder 2, **dadurch gekennzeichnet, dass** die Steuereinheit (107) ausgebildet ist zum Ermitteln und/oder Auswerten einer beliebigen Auswahl und/oder Kombination wenigstens folgender Merkmale des Verhaltens des wenigstens einen Nutzers (101):
• einer Dauer und einer Richtung eines Blicks des wenigstens einen Nutzers (101),
• einer Pupillengröße und/oder einer zeitlichen Änderung dieser Pupillengröße des wenigstens einen Nutzers (101),
• eines Gesichtsausdrucks des wenigstens einen Nutzers (101),
• einer Laut- und/oder Sprachäußerung des wenigstens einen Nutzers (101),
• einer Geste des wenigstens einen Nutzers (101).

4. Anordnung (100) nach Anspruch 1, 2 oder 3, **gekennzeichnet durch** eine Speichereinrichtung (117) zum Speichern wenigstens einer Auswahl der aufgenommenen Bilder des Umfeldes (103).

5. Anordnung (100) nach einem oder mehreren der vorhergehenden Ansprüche, **gekennzeichnet durch** eine Anzeigeeinheit (118) zum Anzeigen wenigstens einer Auswahl der aufgenommenen Bilder des Umfeldes (103).

6. Anordnung (100) nach einem oder mehreren der vorhergehenden Ansprüche, **gekennzeichnet durch** eine Bedieneinheit (119) zum Bedienen der Anordnung (100) durch Eingeben von Bedienbefehlen an die Steuereinheit (107).

7. Anordnung (100) nach einem oder mehreren der vorhergehenden Ansprüche, **gekennzeichnet durch** eine Verbindung mit einer Navigationseinheit (120), die eingerichtet ist zum Ermitteln einer Position und/oder Bewegungsrichtung des wenigstens einen Nutzers (101), und zum Übertragen der ermittelten Position und/oder Bewegungsrichtung an die Steuereinheit (107) zum Auswählen eines aufzunehmenden Bildes des Umfeldes (103) und/oder zum Verknüpfen mit wenigstens einer Auswahl der aufgenommenen Bilder des Umfeldes (103).

8. Anordnung (100) nach einem oder mehreren der vorhergehenden Ansprüche, **gekennzeichnet durch** eine Verwendung und/oder eine Aufnahme in einem Fahrzeug (102), wobei Fahrer und/oder Mitfahrer des Fahrzeugs (102) der wenigstes eine Nutzer (101) sind.

9. Anordnung (100) nach einem oder mehreren der vorhergehenden Ansprüche, **gekennzeichnet durch** eine Verbindung mit einer Übertragungseinheit (121) zum Übertragen wenigstens einer Auswahl der erfassten Bilder des Umfeldes (103) an und/oder über ein Kommunikationsnetzwerk.

10. Anordnung (100) nach einem oder mehreren der vorhergehenden Ansprüche, **gekennzeichnet durch** eine Verbindung mit einer Rechnereinheit (122) zum Übertragen und wahlweisen Bearbeiten und/oder Speichern wenigstens einer Auswahl der aufgenommenen Bilder des Umfeldes (103) und/oder zum Steuern der Anordnung durch die Rechnereinheit (122).

## Claims

1. Arrangement (100) for producing at least one image of a scene (104, 105, 106) of surroundings (103) of at least one user (101), having
• at least one device (108) for recording the at least one image of the surroundings (103),
• a device (111) for detecting a behaviour of the at least one user (101),
• a control unit (107) for evaluating the behaviour of the at least one user (101) and for obtaining therefrom at least one control signal for controlling the device (108) for recording the at least one image of the surroundings (103) according to the behaviour of the at least one user (101), which control comprises selection of a direction of recording (115) and of image details or objects (104, 105, 106) to be recorded in the surroundings (103).

2. Arrangement (100) according to Claim 1, **characterized in that** the device (111) for detecting the behaviour of the at least one user (101) is in a form having at least one visual detection device (112) and/or at least one audio detection device (113) and/or at least one position detection device.

3. Arrangement (100) according to Claim 1 or 2, **characterized in that** the control unit (107) is designed to ascertain and/or evaluate an arbitrary selection and/or combination of at least the following features of the behaviour of the at least one user (101):
• a duration and a direction of a look by the at least one user (101),
• a pupil size and/or a change in this pupil size over time in the at least one user (101),
• a facial expression of the at least one user (101),
• an utterance of sound and/or speech by the at least one user (101),
• a gesture by the at least one user (101).

4. Arrangement (100) according to Claim 1, 2 or 3, **characterized by** a memory device (117) for storing at least one selection of the recorded images of the surroundings (103).

5. Arrangement (100) according to one or more of the preceding claims, **characterized by** a display unit (118) for displaying at least one selection of the recorded images of the surroundings (103).

6. Arrangement (100) according to one or more of the preceding claims, **characterized by** an operator control unit (119) for controlling the arrangement (100) by inputting control commands to the control unit (107).

7. Arrangement (100) according to one or more of the preceding claims, **characterized by** a connection to a navigation unit (120) configured to ascertain a position and/or direction of movement of at least one user (101), and to transmit the ascertained position and/or direction of movement to the control unit (107) to select an image of the surroundings (103) that is to be recorded and/or to link to at least one selection of the recorded images of the surroundings (103).

8. Arrangement (100) according to one or more of the preceding claims, **characterized by** use and/or recording in a vehicle (102), wherein the driver and/or passenger of the vehicle (102) are the at least one user (101).

9. Arrangement (100) according to one or more of the preceding claims, **characterized by** a connection to a transmission unit (121) for transmitting at least one selection of the captured images of the surroundings (103) to and/or via a communication network.

10. Arrangement (100) according to one or more of the preceding claims, **characterized by** a connection to a computer unit (122) for transmitting and selectively processing and/or storing at least one selection of the recorded images of the surroundings (103) and/or for controlling the arrangement by means of the computer unit (122).

## Revendications

1. Dispositif (100) de création d'au moins une image d'une scène (104, 105, 106) d'un environnement (103) d'au moins un utilisateur (101), comprenant
• au moins un moyen (108) d'acquisition de ladite au moins une image de l'environnement (103),
• un moyen (111) de détection d'un comportement dudit au moins un utilisateur (101),
• une unité de commande (107) servant à évaluer le comportement dudit au moins un utilisateur (101) et à obtenir à partir de celui-ci au moins un signal de commande destiné à effectuer une commande du moyen (108) d'acquisition de ladite au moins une image de l'environnement (103), laquelle commande comprend une sélection d'un moyen d'acquisition (115) ainsi que de parties d'image ou d'objets (104, 105, 106) à acquérir de l'environnement (103), conformément au comportement dudit au moins un utilisateur (101).

2. Dispositif (100) selon la revendication 1, **caractérisé en ce que** le moyen (111) de détection du comportement dudit au moins un utilisateur (101) est conçu de manière à comporter au moins un moyen de détection optique (112) et/ou au moins un moyen de détection acoustique (113) et/ou au moins un moyen de détection de position.

3. Dispositif (100) selon la revendication 1 ou 2, **caractérisé en ce que** l'unité de commande (107) est conçue pour déterminer et/ou évaluer une sélection et/ou une combinaison quelconque d'au moins les caractéristiques suivantes du comportement dudit au moins un utilisateur (101) :
• une durée et une direction du regard dudit au moins un utilisateur (101),
• une dimension de pupille et/ou une variation temporelle de ladite dimension de pupille dudit au moins un utilisateur (101),
• une expression faciale dudit au moins un utilisateur (101),
• un énoncé sonore et/ou vocal dudit au moins un utilisateur (101),
• un geste dudit au moins un utilisateur (101).

4. Dispositif (100) selon la revendication 1, 2 ou 3, **caractérisé par** un moyen à mémoire (117) destiné à stocker au moins une sélection des images acquises de l'environnement (103).

5. Dispositif (100) selon l'une ou plusieurs des revendications précédentes, **caractérisé par** une unité d'affichage (118) servant à afficher au moins une sélection des images acquises de l'environnement (103).

6. Dispositif (100) selon l'une ou plusieurs des revendications précédentes, **caractérisé par** une unité de commande (119) servant à commander le dispositif (100) en fournissant des instructions de commande à l'unité de commande (107).

7. Dispositif (100) selon l'une ou plusieurs des revendications précédentes, **caractérisé par** une connexion à une unité de navigation (120) qui est conçue pour déterminer une position et/ou une direction de déplacement dudit au moins un utilisateur (101) et pour transmettre la position et/ou la direction de déplacement déterminée à l'unité de commande (107) à des fins de sélection d'une image de l'environnement à acquérir (103) et/ou à des fins de combinaison avec au moins une sélection des images acquises de l'environnement (103).

8. Dispositif (100) selon l'une ou plusieurs des revendications précédentes, **caractérisé par** une utilisation et/ou une installation dans un véhicule (102), dans lequel des conducteurs et/ou des passagers du véhicule (102) sont ledit au moins un utilisateur (101) .

9. Dispositif (100) selon l'une ou plusieurs des revendications précédentes, **caractérisé par** une connexion à une unité de transmission (121) servant à transmettre au moins une sélection des images détectées de l'environnement (103) à et/ou via un réseau de communication.

10. Dispositif (100) selon l'une ou plusieurs des revendications précédentes, **caractérisé par** une connexion à une unité informatique (122) servant à transmettre et traiter et/ou stocker sélectivement au moins une sélection des images acquises de l'environnement (103) et/ou à la commande du dispositif par l'unité informatique (122).
